# EUROPÄISCHE PATENTSCHRIFT

(11) **EP 3 621 288 B1**
(45) Veröffentlichungstag und Bekanntmachung des Hinweises auf die Patenterteilung: **10.05.2023**
(21) Anmeldenummer: 19195835.4
(22) Anmeldetag: 06.09.2019
(51) Int. Cl.: H04N 23/57, G08B 13/19, H04N 7/18, G08B 13/196

(54) **ANORDNUNG UND VERFAHREN ZUR OPTISCHEN ERFASSUNG VON OBJEKTEN UND/ODER ZU ÜBERPRÜFENDEN PERSONEN**
ARRANGEMENT AND METHOD FOR OPTICALLY DETECTING OBJECTS AND / OR PERSONS TO BE CHECKED
DISPOSITIF ET PROCÉDÉ DE DÉTECTION OPTIQUE DES OBJETS ET / OU DES PERSONNES À VÉRIFIER

(30) Priorität: 07.09.2018 DE 102018121901
(43) Veröffentlichungstag der Anmeldung: 11.03.2020
(73) Patentinhaber: Bundesdruckerei GmbH, 10969 Berlin (DE)
(72) Erfinder: Fischbeck, Matthias, 30826 Hannover (DE); Kring, Achim, 30419 Hannover (DE); Schüring, Andreas, 30827 Garbsen (DE)
(74) Vertreter: Hentrich Patent- & Rechtsanwaltspartnerschaft mbB

(56) Entgegenhaltungen:
- US-A1- 2008 030 580
- US-A1- 2010 245 585
- US-A1- 2012 249 797
- US-A1- 2015 170 249
- US-A1- 2016 028 947
- US-A1- 2017 032 168
- US-A1- 2018 033 177

## Beschreibung

Die Erfindung betrifft eine Anordnung mit einer Augmented-Reality_Brille mit einer Prozessoreinheit, die ausgebildet ist, mit der Kamera über eine Kommunikationsverbindung zu kommunizieren, und die eine Auswerteeinheit aufweist, welche ausgebildet ist, Daten, die mittels der Kamera von der zu überprüfenden Person erfasst werden, weiterzuverarbeiten und anschließend ein sich daraus ergebendes Verarbeitungsergebnis an eine Ausgabeeinheit zu übermitteln, welche hierzu ausgebildet ist, mit der Prozessoreinheit ebenfalls über eine Kommunikationsverbindung zu kommunizieren. Die Erfindung betrifft weiterhin ein Verfahren zum optischen Erfassen eines Objekts und/oder einer zu überprüfenden Person mit einer solchen Anordnung.

Eine Anordnung gemäß dem Oberbegriff des Anspruchs 1 ist beispielsweise aus der US 2016 / 028 947 A1 bekannt. Sie beschreibt ein Wearable mit einer Kamera, die über eine Kommunikationsverbindung mit einem Computer verbunden ist, der eine Identität einer von der Kamera stehenden Person überprüfen kann. Dabei kann eine optische Erfassung durch eine Kamera an einem Brillengestell der Brille erfolgen, wobei diese Brille zugleich als augmented reality display genutzt werden kann.

Aus der US 2016/0183604 A1 ist eine Anordnung bekannt, bei welcher eine Kamera in ein Bekleidungsstück integriert ist, um ein Objekt zu erfassen. Das Abbild des Objekts wird dann an die Prozessoreinheit gesendet, um dort analysiert zu werden und um beschreibende Informationen zu dem erfassten Objekt an einer Ausgabeeinheit auszugeben. Diese Ausgabeeinheit kann einerseits im Bekleidungsstück selbst, nämlich im Ärmel, integriert sein oder in einem in der Hand gehaltenen Gerät, beispielsweise einem Smartphone, um die beschreibenden Informationen dort auszugeben.

Die US 2008 / 0030 580 A1 beschreibt ein System zur optischen Erfassung von Personen, das typischerweise von Polizeibeamten getragen werden kann, wobei das Wearable in Kommunikationsverbindung mit einem Server bei der Polizeistation steht.

In der US 2015 / 0 170 249 A1 sind ein Verfahren und ein System in Form einer Smart Watch beschrieben, um Produkte identifizieren zu können, beispielsweise anhand ihres Barcodes.

Die US 2018 / 0033 177 A1 beschreibt ein head mounted electronic device (HMD) welches in Form einer Augmented-Reality-Brille vorliegt. Auch hier kann eine Kamera vorhanden sein, die die Umgebung aufzeichnet, wobei ein Prozessor vorliegt, um Objekte zu erfassen. Basierend darauf kann dann ein Abstand zu einem Objekt errechnet werden.

Die US 2017 / 0032 168 A1 beschreibt eine Smart Watch, die mit einem doppelten biometrischen Sensor ausgestattet ist.

Die US 2010 / 0 245 585 A1 beschreibt ein Headsetsystem, das mit einer Kamera ausgestattet ist, und das eine Lichtquelle umfassen kann.

In der US 2012 / 0 249 797 A1 wird eine interaktive Augmented-Reality-Brille sowie verschiedene mit dieser kombinierbare Geräte beschrieben. Sie beschreibt die Möglichkeit, dass die Augmented-Reality-Brille von Soldaten an Grenzposten zur Identifizierung von Personen genutzt werden kann.

Hat ein Mitarbeiter einer Sicherheitsfirma oder Sicherheitspersonal, nämlich eine prüfende Person, eine Überprüfung, insbesondere eine Identitätsprüfung, bei einer zu überprüfenden Person durchzuführen, so weist die vorstehend beschriebene Anordnung den Nachteil auf, dass ein mobiles Endgerät verwendet wird, welches von der prüfenden Person in der Hand gehalten wird. Auch eine Ausgestaltung einer Ausgabeeinheit am Bekleidungsstück selbst weist den Nachteil auf, dass diese durch darüber liegende Bekleidungsstücke bedeckt werden könnte. In manchen Situationen kann es zudem notwendig sein, dass die zu überprüfende Person oder das zu überprüfende Objekt nahezu unbemerkt überprüft wird, so dass ein in der Hand der prüfenden Person gehaltenes Gerät diesem Erfordernis nicht gerecht wird.

Es ist daher die Aufgabe der vorliegenden Erfindung, eine Anordnung und ein Verfahren zur optischen Erfassung einer zu überprüfenden Person derart weiterzubilden, dass die Überprüfung effizienter und für die prüfende Person sicherer ausgestaltet ist, wobei eine verbesserte Authentifizierung der Person ermöglicht ist.

Der die Anordnung betreffende Teil der Aufgabe wird durch eine Anordnung mit dem Merkmalsbestand des Anspruchs 1 gelöst. Vorteilhafte Ausgestaltungen mit zweckmäßigen Weiterbildungen dieser Anordnung sind in den davon abhängigen Ansprüchen angegeben.

Die Anordnung zeichnet sich insbesondere dadurch aus, dass die Ausgabeeinheit in das Accessoire oder in ein zweites Accessoire eingebracht oder integriert und somit ausgebildet ist, an einer prüfenden Person derart angelegt oder zumindest zeitweise fixiert zu werden, dass die Hände der prüfenden Person, insbesondere während des optischen Erfassens, frei bleiben.

Damit ist also der Vorteil verbunden, dass Personen, die Zugangskontrollen oder Authentifizierungen durchführen, beide Hände für die Kontrolle und für die Eigensicherung bzw. den Eigenschutz frei behalten. Somit kann auch eine Abtastung des Objekts und/oder der zu überprüfenden Person durch Geräte ungestört manuell erfolgen.

Es hat sich als vorteilhaft erwiesen, wenn die Accessoires ausgewählt sind aus einer Gruppe, die eine Augmented-Reality-Brille (kurz "AR-Brille"; engl. für "erweiternde Realität"), eine Smartwatch (engl. "schlaue Uhr"), ein ein oder mehrere LEDs (Leuchtdioden) aufweisendes LED-Armband, ein am Körper anlegbares Geschirr, beispielsweise ein Stirnband oder ein Brustgurt, sowie Helme oder Mützen umfasst. Damit ist also unter Accessoires ein am Körper anlegbares Element zu verstehen, das kein Bekleidungsstück, insbesondere kein textiles Bekleidungsstück darstellt. Durch diese entsprechende Ausgestaltung ist die Anordnung also smartphonefrei gebildet, so dass gewährleistet ist, dass die Hände der prüfenden Person beim Kontroll- oder Authentifizierungsvorgang frei bleiben.

Erfindungsgemäß ist die Anordnung dadurch gekennzeichnet, dass die Kamera in ein Gestell einer die Ausgabeeinheit bildenden Augmented-Reality-Brille integriert ist, und dass die Prozessoreinheit ausgebildet ist, über eine Kommunikationsverbindung mit einer Smartwatch zu kommunizieren, welche ein Touchscreen ("Sensorbildschirm") aufweist, und welche ausgebildet ist, einen oder mehrere Fingerabdrücke der zu überprüfenden Person zu erfassen. Durch die Überprüfung des Fingerabdrucks oder mehrerer Fingerabdrücke lässt sich eine zusätzliche Sicherheitsstufe durch die Anordnung realisieren. Durch diese Ausgestaltung ist nämlich eine Anordnung gebildet, die nicht nur die Person selbst, insbesondere das Gesicht der Person und/oder dessen biometrische Merkmale, optisch erfasst, sondern welche erfindungsgemäß auch ein Daktylogramm von einem oder von mehreren Fingern der zu überprüfenden Person in der Prozessoreinheit verarbeiten kann, um die zu überprüfende Person näher, mithin genauer, zu authentifizieren. Durch diese Anordnung lässt sich die Identität einer Person zweifelsfrei feststellen, wobei die Kamera und die Prozessoreinheit auch derart ausgebildet sein können, um ein Passbild einer Person automatisch mit der zu überprüfenden Person selbst oder mit einem von der Person erfassten Bild zu vergleichen.

Um die Anordnung auch in anderen Anwendungsfällen, also abseits der Personenkontrolle, einsetzen zu können, hat es sich als vorteilhaft erwiesen, wenn die Kamera ausgebildet ist, einen QR-Code, beispielsweise nach den Vorgaben der ISO/IEC 18004 (bspw. in der Fassung ausgegeben im Februar 2015) zu erfassen, und dass die Auswerteeinheit ausgebildet ist, den QR-Code auszuwerten. Alternativ oder ergänzend hat es sich als vorteilhaft herausgestellt, wenn die Kamera ausgebildet ist, einen Strichcode, beispielsweise einen Strichcode gemäß der ISO/IEC 15420 (bspw. in der Fassung ausgegeben im Dezember 2009) zu erfassen, und dass die Auswerteeinheit ausgebildet ist, den Strichcode auszuwerten. Somit lässt sich die Anordnung beispielsweise bei der Zugangskontrolle von Veranstaltungen einsetzen, deren Tickets häufig mit derartigen QR-Codes oder Strichcodes ausgestattet sind, womit die Anordnung ausgebildet ist, die Validität des Tickets zu prüfen und/oder um den Zugang zur Veranstaltung zu kontrollieren. Zugleich bleiben die Hände der prüfenden Personen frei, so dass diese für eine ungehinderte Taschenkontrolle zur Verfügung stehen.

Es ist sinnvoll, wenn der Prozessoreinheit eine Sende- und Empfangseinheit zugeordnet ist, und wenn die Prozessoreinheit mittels der Sende- und Empfangseinheit in Kommunikationsverbindung mit einem hierarchisch gegenüber der Prozessoreinheit übergeordneten Server steht, der ausgebildet ist, um einen Auswerteauftrag oder mehrere Auswerteaufträge zur Auswertung der mittels der Kamera erfassten Daten abzuarbeiten und um ein Auswerteergebnis an die Prozessoreinheit zurückzugeben. Diese Ausgestaltung eröffnet die Möglichkeit, mehrere Überprüfungen parallel durchführen zu können. Durch die Bereitstellung des hierarchisch gegenüber der Prozessoreinheit übergeordneten Servers lässt sich nämlich eine Mehrzahl von Anordnungen zur optischen Erfassung eines Objekts und/oder einer Person mittels des Servers zu einem Netzwerk aus Anordnungen verbinden. Zudem können aufwändige Rechen- oder Auswerteaufträge zu dem Server ausgelagert werden, um die zumeist dezentral angeordneten Anordnungen in ihrem Rechenaufwand zu entlasten, was zu einem geringeren Stromverbrauch und damit zu einer längeren Laufzeit der Anordnungen zu optischen Erfassung führt.

In manchen Fällen, beispielsweise wenn Objekte wie Ausweis-, Wert- oder Sicherheitsdokumente, beispielsweise Personalausweise oder Reisepässe, zu erfassen sind, hat es sich als vorteilhaft erwiesen, wenn mindestens eine Lichtquelle zur zusätzlichen Beleuchtung des Objekts und/oder der zu erfassenden Person während des optischen Erfassens vorhanden ist, die ebenfalls an dem Bekleidungsstück und/oder an einem oder an mehreren der Accessoires angebracht oder darin integriert ist.

Der das Verfahren betreffende Teil der Aufgabe wird mit einem Verfahren mit dem Merkmalsbestand des Anspruchs 5 gelöst. Vorteilhafte Ausgestaltungen mit zweckmäßigen Weiterbildungen dieses Verfahrens sind in den davon abhängigen Ansprüchen angegeben.

Das Verfahren zum optischen Erfassen eines Objekts und/oder einer zu überprüfenden Person wird mit einer Anordnung durchgeführt, welche eine Kamera aufweist, die in ein Bekleidungsstück oder in ein Accessoire eingebracht oder integriert ist und welche mit einer eine Auswerteeinheit aufweisenden Prozessoreinheit in Kommunikationsverbindung steht. Das Verfahren zeichnet sich insbesondere durch die folgenden Schritte aus:
- Optisches Erfassen des Objekts und/oder der zu überprüfenden Person mittels der Kamera,
- Weiterverarbeiten von mittels der Kamera erfasster Daten in der Auswerteeinheit zu einem Verarbeitungsergebnis, und
- Übertragen des Verarbeitungsergebnisses an eine in Kommunikationsverbindung mit der Prozessoreinheit stehende Ausgabeeinheit, die ebenfalls in das Accessoire oder in ein zweites Accessoire eingebracht oder integriert ist.

Dieses Verfahren eine voll- oder teilautomatisierte Überprüfungsmöglichkeit von Objekten und/oder zu überprüfenden Personen zur Verfügung, wie sie an Zugangskontrollpunkten, beispielweise an Flughäfen, durchgeführt wird. Aufgrund der Einbindung der entsprechenden Konstituenten in die Accessoires oder in die Bekleidungsstücke, ist es möglich, dass die prüfende Person beide Hände frei hat zur Durchführung der Kontrolle, beispielsweise für ein Abtasten des Objekts und/oder der zu überprüfenden Person.

Erfindungsgemäß ist vorgesehen, dass neben einer Erfassung biometrischer Merkmale des Gesichts zudem ein Fingerabdruck erfasst wird, um eine sichere Authentifizierung einer Person durchzuführen. Aus diesem Grund ist die Kamera in ein als eine Augmented-Reality-Brille gebildetes Accessoire integriert, in welcher zudem die Ausgabeeinheit vorliegt, wobei ein als eine Smartwatch mit einem Touchscreen gebildetes zweites Accessoire vorhanden ist, mit welchem mindestens ein Fingerabdruck der zu überprüfenden Person erfasst wird.

Zur sicheren und zur weitergehenden Information der die Kontrolle durchführenden Person oder zur noch besseren Authentifizierung der zu überprüfenden Person, ist erfindungsgemäß vorgesehen, dass der mindestens eine erfasste Fingerabdruck mit in einer Datenbank der Prozessoreinheit hinterlegten Fingerabdrücken abgeglichen wird, welche in Korrelation zu weiteren personenbezogenen Daten stehen, und dass bei Übereinstimmung des erfassten Fingerabdrucks mit einem der in der Datenbank hinterlegten Fingerabdrücke die zugehörigen personenbezogenen Daten an der Ausgabeeinheit ausgegeben werden. Schlägt jedoch eine Zuordnung fehl, so kann an der Ausgabeeinheit ein Alarmsignal oder ein Alarmhinweis ausgegeben werden.

Um die Anordnung zusätzlich zu automatisieren, hat es sich als vorteilhaft erwiesen, wenn mittels der Anordnung ein Abstand des zu erfassenden Objekts und/oder der zu überprüfenden Person gemessen wird, und wenn das optische Erfassen dann erfolgt, wenn sich das zu erfassende Objekt und/oder die zu überprüfende Person in einem vorgegebenen oder vorgebbaren Abstand zur Kamera befindet. Somit ist also eine Prüfung schon im Annähern einer zu überprüfenden Person möglich, und die Hände sind für die Kontrolle und die Eigensicherung der prüfenden Person frei.

Für das Verfahren ist zudem die Möglichkeit eröffnet, dass mittels der Kamera sowohl objektbezogene Daten des Objekts als auch bildbezogene Daten der Person erfasst werden, und dass in der Auswerteeinheit ein Abgleich der objektbezogenen Daten und der bildbezogenen Daten erfolgt.

Alternativ oder ergänzend kann hierbei ein RFID-Leser (engl. "radio frequency identification"), insbesondere ein NFC-Leser (engl. "near field communication") eingesetzt werden, um RFID- oder NFC-lesbare Daten des Objekts und/oder eines Dokuments zu erfassen und der weiteren Verarbeitung der Auswerteeinheit zuzuführen. Diese Daten können ebenfalls Daten zu, insbesondere biometrischen, Merkmalen des Gesichts und/oder von Fingerabdrücken darstellen. Die Auswerteeinheit ist ausgebildet, diese RFID-lesbaren oder NFC-lesbaren Daten mit den durch die Kamera erfassten Daten abzugleichen.

Beispielsweise wird mittels der Kamera das Gesicht der Person erfasst. Zeitgleich oder nachfolgend wird ein Dokument, insbesondere optisch mittels der Kamera, erfasst, welches ebenfalls Daten oder Referenzierungen zu Daten hinsichtlich der Merkmale des Gesichts der Person enthält. Die Auswerteeinheit ist dann ausgebildet, die Daten abzugleichen, um beispielsweise die Identität der Person anhand der Gesichtsbilder festzustellen.

Wiederum beispielsweise wird mittels der Kamera das Gesichts und/oder die Fingerabdrücke der Person optisch erfasst. Zeitgleich oder nachfolgend wird ein Dokument, insbesondere optisch mittels der Kamera, erfasst, welches ebenfalls Daten oder Referenzierungen zu Daten zu Fingerabdrücken enthält. Die Auswerteeinheit ist dann ausgebildet, die Daten abzugleichen, um beispielsweise die Identität der Person anhand der Fingerabdrücke festzustellen.

Im Folgenden wird die Erfindung an in der Zeichnung dargestellten Ausführungsbeispielen neu erläutert; es zeigen:
- Fig. 1: eine Anordnung zur optischen Erfassung eines Objekts und/oder einer zu überprüfenden Person,
- Fig. 2: einen schematisch dargestellten ersten Verfahrensablauf,
- Fig. 3: einen schematisch dargestellten zweiten Verfahrensablauf,
- Fig. 4: einen schematisch dargestellten dritten Verfahrensablauf, und
- Fig. 5: einen schematisch dargestellten vierten Verfahrensablauf.

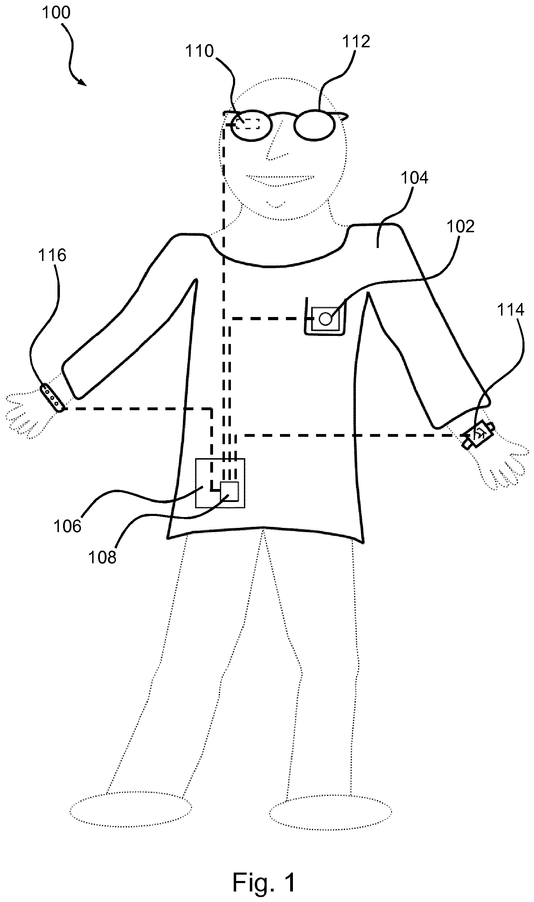

In Figur 1 ist eine Anordnung 100 zur optischen Erfassung eines Objekts und/oder einer zu überprüfenden Person gezeigt, welche eine Kamera 102 aufweist, die in ein Bekleidungsstück 104, vorliegend in ein Hemd eingebracht oder integriert ist. Schematisch ist angedeutet, wie die Kamera 102 in eine Brusttasche des Bekleidungsstücks 104 eingebunden ist. Es ist jedoch auch möglich, die Kamera 102 an Knopfpositionen eines Hemds oder an Positionen von Nieten einer Schutzweste anzuordnen. Zudem ist es möglich, dass die Kamera 102 auch in ein von der prüfenden Person getragenes Accessoire integriert ist. Durch die strichliert dargestellten Linien wird erkennbar, dass die Kamera 102 mit einer Prozessoreinheit 106 in Kommunikationsverbindung steht.

Die gezeigten Kommunikationsverbindungen können beispielswiese drahtgebunden, beispielsweise mit einem flexiblen Textilkabel, aber auch drahtlos gebildet sein, beispielsweise durch eine Funkverbindung mittels Bluetooth (Standard gemäß IEEE 802.15.1) oder mittels WLAN (engl. "wireless local area network"; Standard gemäß IEEE 802.11, IEEE 802.11a, IEEE 802.11b, IEEE 802.11h, IEEE 802.11g, IEEE 802.11n, IEEE 802.11ac oder IEEE 802.11ad). Auch drahtlose Kommunikationsverbindungen mittels RFID (engl. "radio-frequency identification"), insbesondere mittels NFC (engl. "nearfield communication"), können bei der vorliegenden Anordnung 100 verwendet sein.

Die Prozessoreinheit 106 ist für ihre Spannungs- und Stromversorgung mit einem nicht näher dargestellten elektrischen Speicher, insbesondere mit einem Akkumulator, beispielsweise einem Lithiumionen-Akkumulator elektrisch verbunden. Die Prozessoreinheit 108 weist eine Auswerteeinheit 108 auf. Die Auswerteeinheit 108 ist ausgebildet, Daten, die mittels der Kamera 102 von dem Objekt und/oder von der zu überprüfenden Person erfasst werden, weiterzuverarbeiten.

Die Auswerteeinheit 108 der Prozessoreinheit 106 kann die von der Kamera 102 erfassten Bilddaten zu einem Verarbeitungsergebnis weiterverarbeiten, welches mittels der Prozessoreinheit 106 an eine Ausgabeeinheit 110 übermittelbar ist. Die Ausgabeeinheit 110 steht hierzu ebenfalls in Kommunikationsverbindung mit der Prozessoreinheit 106 und ist zudem in ein Accessoire eingebracht oder integriert. Dieses ist ausgebildet, an der prüfenden Person oder am Sicherheitspersonal derart angelegt oder zumindest zeitweise fixiert zu werden, dass die Hände frei bleiben, insbesondere während des optischen Erfassens des Objekts und/oder der zu überprüfenden Person.

Bei der in Figur 1 gezeigten Anordnung 100 ist rein exemplarisch ein erstes Accessoire in Form einer Augmented-Reality-Brille 112, ein zweites Accessoire in Form einer Smartwatch 114 und ein drittes Accessoire in Form eines insgesamt drei LEDs aufweisenden Armbandes 116 gezeigt. Es können bei der Anordnung 100 aber auch weniger als die drei gezeigten Accessoires vorhanden sein. Dabei besteht selbstverständlich die Möglichkeit, die Kamera 102 nicht in das Bekleidungsstück 104, sondern in das Gestell der Augmented-Reality-Brille 112 zu integrieren, so dass diese Augmented-Reality-Brille 112 sowohl die Kamera 102 als auch die Ausgabeeinheit 110 umfasst, welche vorzugsweise in Form eines teiltransparenten Displays, insbesondere im Bereich des Brillenglases der Augmented-Reality-Brille 112 vorliegt. Durch diese Ausgestaltung wird der prüfenden Person das Verarbeitungsergebnis unmittelbar in das eigene Blickfeld mittels der Ausgabeeinheit 110 projiziert, wobei das von der Auswerteeinheit 108 erstellte Verarbeitungsergebnis auf den von der Kamera 102 erfassten Daten basiert.

Das optionale dargestellte LED-Armband 116 kann beispielsweise drei verschieden farbige LEDs umfassen, wobei vorzugsweise eine rote, eine gelbe und eine grüne LED vorhanden sind, um in Abhängigkeit des Verarbeitungsergebnisses eine "erfolgreiche Authentifizierung" (grün), eine "Zugangsverweigerung" (rot) oder ein "missverständliches Auswerteergebnis" (gelb) anzuzeigen.

Es hat sich als vorteilhaft erwiesen, wenn die Smartwatch 114 vorhanden ist und ebenfalls in einer Kommunikationsverbindung mit der Prozessoreinheit 106 steht, so dass über ein Touchscreen der Smartwatch 114 der Fingerabdruck der zu überprüfenden Person erfasst werden kann. Die Smartwatch 114 kann also als Ausgabeeinheit 110 einerseits und als ein Eingabegerät zur Erfassung von Daten der zu überprüfenden Person andererseits agieren.

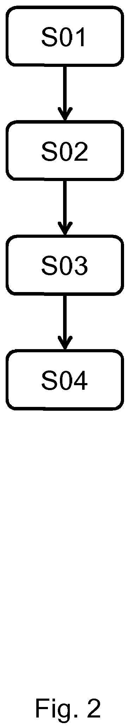

Anhand von Figur 2 wird nachfolgend das Verfahren erläutert, welches mittels der Anordnung 100 nach Figur 1 durchgeführt wird.

Zunächst wird ein Objekt, beispielsweise ein Ausweis-, Wert- oder Sicherheitsdokument, und/oder eine zu überprüfende Person mittels der Kamera 102 erfasst (Schritt S01). Die mittels der Kamera 102 erfassten Daten werden an die Auswerteeinheit 108 der Prozessoreinheit 106 gesendet (Schritt S02), wo sie zu einem Verarbeitungsergebnis weiterverarbeitet werden (Schritt S03). Das Verarbeitungsergebnis wird dann an die Ausgabeeinheit 110 der Augmented-Reality-Brille 112 gesendet und dort ausgegeben, mithin angezeigt (Schnitt S04). Dieses Verarbeitungsergebnis kann beispielsweise die Information sein, ob der zu überprüfenden Person Zutritt oder Durchgang gewährt werden sollte oder nicht.

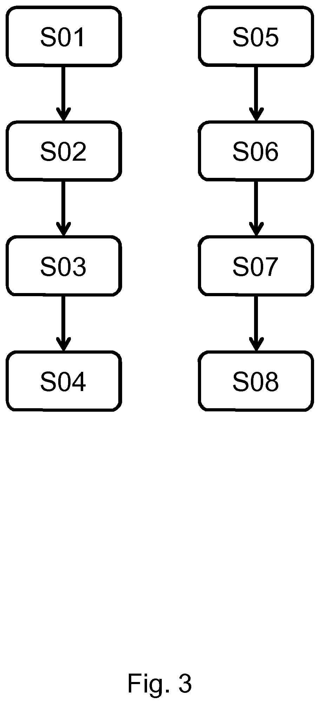

Das Verfahren umfasst weitere Schritte, die zeitgleich oder nachfolgend zu den vorstehend beschriebenen Schritten durchgeführt werden. Weitere Schritte werden nachfolgend anhand von Figur 3 erläutert.

Die dort gezeigten erfindungsgemäß vorgesehenen Schritte betreffen das Erfassen mindestens eines Fingerabdrucks der zu überprüfenden Person mittels des Touchscreens der Smartwatch 114 (Schritt S05). Die Daten des Fingerabdrucks werden dann an die Prozessoreinheit 106, insbesondere an deren Auswerteeinheit 108, übertragen (Schritt S06), wo sie mit in einer Datenbank, welche in einem Speicher der Prozessoreinheit 106 gespeichert ist, enthaltenen Fingerabdrücken abgeglichen werden, und welche insbesondere in Korrelation zu weiteren personenbezogenen Daten stehen (Schritt S07). Anschließend werden bei einer Übereinstimmung des erfassten Fingerabdrucks mit einem der in der Datenbank hinterlegten Fingerabdrücke eine Information oder die zugehörigen personenbezogenen Daten an der Ausgabeeinheit 110 ausgegeben (Schritt S08).

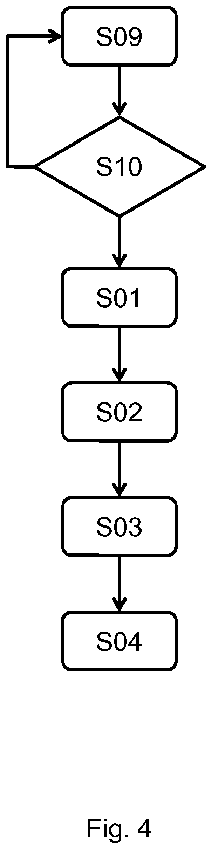

Anhand von Figur 4 wird eine Erweiterung des Verfahrens beschrieben, wie es in Zusammenhang mit Figur 2 erläutert wurde. Hierbei wird mittels der Anordnung 100 ein Abstand des zu erfassenden Objekts und/oder der zu überprüfenden Person gemessen (Schritt S09). Hierbei wird überprüft, ob sich das zu erfassende Objekt und/oder die zu überprüfende Person in einem vorgegebenen oder vorgebbaren Abstand zur Kamera 102 befindet (Prüfung gemäß Schritt S10). Sollte der Abstand zu dem zu erfassenden Objekt und/oder zu der zu überprüfenden Person den vorgegebenen oder vorgebbaren Abstand noch überschreiten, so wird der Abstand, insbesondere wiederkehrend, erneut gemessen (Schritt S09). Wird der vorgegebene oder der vorgebbare Abstand erreicht oder unterschritten, so erfolgt das optische Erfassen mittels der Kamera 102 automatisch (Schritt S01). Die weiteren Verfahrensschritte sind dieselben, wie sie im Zusammenhang mit Figur 2 erläutert wurden.

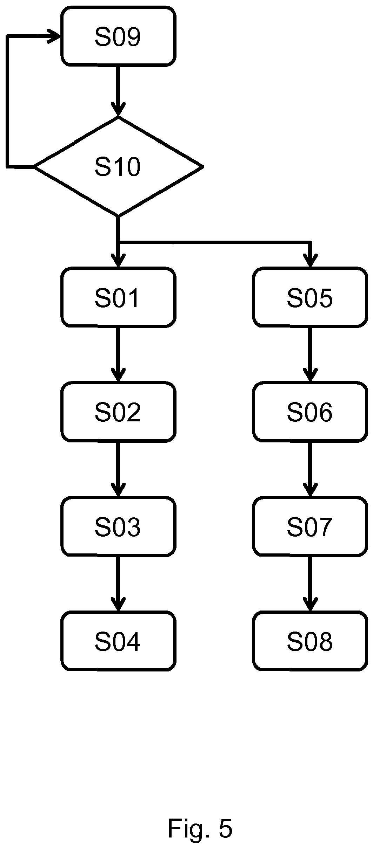

Entsprechend kann gemäß Figur 5 das in Zusammenhang mit Figur 3 erläuterte Verfahren weitergebildet sein, wobei auch hier im Vorfeld der Abstand der Kamera 102 zum erfassenden Objekt und/oder zur zu überprüfenden Person gemessen wird (Schritt S09). Auch hier wird die optische Erfassung des Objekts und/oder der zu überprüfenden Person mittels der Kamera 102 erst beim Erreichen oder beim Unterschreiten des vorgegebenen oder vorgebbaren Abstands zur Kamera 102 begonnen (Schritt S01). Zeitgleich oder nachfolgend wird dann auch der Fingerabdruck mittels der Smartwatch 114 erfasst (Schritt S05). Hinsichtlich der weiteren Verfahrensschritte wird auf die Erläuterung in Zusammenhang mit Figur 3 verwiesen.

Die erfindungsgemäße Anordnung 100 und das erfindungsgemäße Verfahren zeichnen sich dadurch aus, dass ein Objekt und/oder eine zu überprüfende Person von einer prüfenden Person, mithin von Sicherheitspersonal, smartphonefrei, insbesondere aber mit zwei freien Händen, erfasst und kontrolliert werden kann, ohne dabei durch ein mobiles Endgerät in der Bewegungsfreiheit eingeschränkt zu sein.

### BEZUGSZEICHENLISTE

- 100: Anordnung
- 102: Kamera
- 104: Bekleidungsstück
- 106: Prozessoreinheit
- 108: Auswerteeinheit
- 110: Ausgabeeinheit
- 112: Augmented-Reality-Brille
- 114: Smartwatch

## Patentansprüche

1. Anordnung (100) mit einer Augmented-Reality-Brille (112) zur optischen Erfassung biometrischer Merkmale des Gesichts einer zu überprüfenden Person sowie mit einer Smartwatch (114) für die genauere Authentifizierung der zu überprüfenden Person,
mit einer Kamera (102), die in ein Gestell der Augmented-Reality-Brille (112) integriert ist,
mit einer Ausgabeeinheit (110), die in die Augmented-Reality-Brille (110) integriert ist,
mit einer Prozessoreinheit (106), die ausgebildet ist, mit der Kamera (102) über eine Kommunikationsverbindung zu kommunizieren, und die eine Auswerteeinheit (108) aufweist, welche ausgebildet ist, die biometrischen Merkmale des Gesichts in Form von Daten, die mittels der Kamera (102) von der zu überprüfenden Person erfasst werden, weiterzuverarbeiten und anschließend ein sich daraus ergebendes Verarbeitungsergebnis an die Ausgabeeinheit (110) zu übermitteln, welche hierzu ausgebildet ist, mit der Prozessoreinheit (106) ebenfalls über eine Kommunikationsverbindung zu kommunizieren, wobei die Augmented-Reality-Brille (110) ausgebildet ist, an einer prüfenden Person derart angelegt oder zumindest zeitweise fixiert zu werden, dass die Hände der prüfenden Person während des optischen Erfassens frei bleiben,
wobei die Smartwatch (114) in einer Kommunikationsverbindung mit der Prozessoreinheit (106) steht,
wobei die Smartwatch (114) ein Touchscreen aufweist und zur Realisierung einer zusätzlichen Sicherheitsstufe ausgebildet ist, einen oder mehrere Fingerabdrücke der zu überprüfenden Person zu erfassen,
wobei die Smartwatch (114) eingerichtet ist, den einen oder die mehreren Fingerabdrücke zeitgleich mit oder zeitlich nach dem optischen Erfassen des Gesichts der zu überprüfenden Person zu erfassen,
wobei die Prozessoreinheit (106) ausgebildet ist, ein Daktylogramm von einem oder von mehreren Fingern der zu überprüfenden Person zu verarbeiten und mit in einer Datenbank der Prozessoreinheit (106) hinterlegten Fingerabdrücken abzugleichen,
und wobei die Ausgabeeinheit (110) eingerichtet ist, bei Übereinstimmung des erfassten Fingerabdrucks mit einem in der Datenbank hinterlegten Fingerabdrücke eine Information oder zugehörige personenbezogene Daten an der Ausgabeeinheit (110) auszugeben.

2. Anordnung (100) nach Anspruch 1, **dadurch gekennzeichnet, dass** die Kamera (102) ausgebildet ist, einen QR-Code oder einen Strichcode zu erfassen, und dass die Auswerteeinheit (108) ausgebildet ist, den QR-Code oder den Strichcode auszuwerten.

3. Anordnung (100) nach Anspruch 1 oder 2, **dadurch gekennzeichnet, dass** der Prozessoreinheit (108) eine Sende- und Empfangseinheit zugeordnet ist, und dass die Prozessoreinheit (108) mittels der Sende- und Empfangseinheit in Kommunikationsverbindung mit einem hierarchisch gegenüber der Prozessoreinheit (108) übergeordneten Server steht, der ausgebildet ist, um einen oder mehrere Auswerteaufträge zur Auswertung der mittels der Kamera (102) erfassten Daten abzuarbeiten und um ein Auswerteergebnis an die Prozessoreinheit (108) zurückzugeben.

4. Anordnung (100) nach einem der Ansprüche 1 bis 3, **dadurch gekennzeichnet, dass** mindestens eine Lichtquelle zur zusätzlichen Beleuchtung der Person während des optischen Erfassens vorhanden ist, die in die Augmented-Reality-Brille (112) integriert ist.

5. Verfahren zum optischen Erfassen einer zu überprüfenden Person sowie zu deren Authentifizierung, mit einer Anordnung (100) nach einem der Ansprüche 1 bis 4, umfassend die Schritte:
- Optisches Erfassen von biometrischen Merkmalen des Gesichts der zu überprüfenden Person mittels der Kamera (102),
- Erfassen von mindestens einem Fingerabdruck der zu überprüfenden Person mittels der Smartwatch (114),
- Weiterverarbeiten von mittels der Kamera (102) und der Smartwatch (114) erfasster Daten in der Auswerteeinheit (108) zu einem Verarbeitungsergebnis, wobei der mindestens eine erfasste Fingerabdruck mit in einer Datenbank der Prozessoreinheit (106) hinterlegten Fingerabdrücken abgeglichen wird, welche in Korrelation zu weiteren personenbezogenen Daten steht, und
- Übertragen des Verarbeitungsergebnisses an die in Kommunikationsverbindung mit der Prozessoreinheit (106) stehende Ausgabeeinheit (110), wobei, bei Übereinstimmung des erfassten Fingerabdrucks mit einem der in der Datenbank hinterlegten Fingerabdrücke, zudem die zugehörigen personenbezogenen Daten an der Ausgabeeinheit (110) ausgegeben werden.

6. Verfahren nach Anspruch 5, **dadurch gekennzeichnet, dass** mittels der Anordnung (100) ein Abstand der zu überprüfenden Person gemessen wird, und dass das optische Erfassen dann erfolgt, wenn sich die zu überprüfende Person in einem vorgegebenen oder vorgebbaren Abstand zur Kamera (102) befindet.

## Claims

1. Arrangement (100) comprising augmented reality glasses (112) for optically capturing biometric features of the face of a person to be checked and a smartwatch (114) for more accurate authentication of the person to be checked,
with a camera (102), which is integrated in a frame of the augmented reality glasses (112),
with an output unit (110), which is integrated into the augmented reality glasses (110), with a processor unit (106), which is configured to communicate with the camera (102) via a communication link, and which has an evaluation unit (108), which is configured to further process the biometric features of the face in the form of data that is recorded by the camera (102) from the person to be checked, and then to transmit a resulting processing result to the output unit (110), which is therefor likewise configured to be connected processor unit (106) via a communication link, whereas the augmented reality glasses (110) is configured to be applied to an examining person or to be fixed at least temporarily in such a way that the hands of the examining person remain free during the optical capturing,
wherein the smartwatch (114) is in a communication link with the processor unit (106), wherein the smartwatch (114) has a touch screen and is configured to capture one or more fingerprints of the person to be checked to implement an additional level of security,
wherein the smartwatch (114) is configured to capture the one or more fingerprints simultaneously with or temporally after the visual capture of the face of the person to be checked,
wherein the processing unit (106) is adapted to process a dactylogram of one or more fingers of the person to be checked and to match it with fingerprints stored in a database of the processing unit (106),
and wherein the output unit (110) is configured to output information or associated personal data to the output unit (110) if the acquired fingerprint matches a fingerprint stored in the database.

2. The arrangement (100) according to claim 1, **characterized in that** the camera (102) is designed to capture a QR code or a bar code, and **in that** the evaluation unit (108) is configured to evaluate the QR code or the bar code.

3. The arrangement (100) according to claim 1 or 2, **characterized in that** the processor unit (108) is assigned a transmitting and receiving unit, and **in that** the processor unit (108) is in communication connection by means of the transmitting and receiving unit with a server which is hierarchically superordinate with respect to the processor unit (108), and which is configured to process one or more evaluation jobs for evaluating the data recorded the camera (102) and to return an evaluation result to the processor unit (108).

4. The arrangement (100) according to any one of claims 1 to 3, **characterized in that** at least one light source for additional illumination of the person during the optically capturing is provided, which is integrated in the augmented reality glasses (112).

5. A method for optically capturing a person to be checked and for authenticating the person, with an arrangement (100) according to any one of claims 1 to 4, comprising the steps of:
- Optically capturing biometric features of the face to the person to be checked by means of the camera (102),
- Capturing at least one fingerprint of the person to be verified by means of the smartwatch (114),
- Further processing of data acquired by means of the camera (102) and the smartwatch (114) in the evaluation unit (108) to form a processing result, the at least one acquired fingerprint being compared with fingerprints stored in a database of the processor unit (106), which database is correlated with further personal data, and
- Transmitting the processing result to an output unit (110), which is in communication with the processor unit (106), wherein, if the acquired fingerprint matches one of the fingerprints stored in the database, the associated personal data is also output at the output unit (110).

6. The Method according to claim 5, **characterized in that** a distance of the person to be checked is measured by means of the arrangement (100), and **in that** the optically capturing takes place when the person to be checked is located at a predetermined or predeterminable distance from the camera (102).

## Revendications

1. Agencement (100) avec des lunettes de réalité augmentée (112) pour une détection optique de caractéristiques biométriques du visage d'une personne à contrôler ainsi qu'avec une montre intelligente (114) pour l'authentification plus précise de la personne à contrôler,
avec une caméra (102), qui est intégrée dans une monture des lunettes de réalité augmentée (112),
avec une unité de sortie (110), qui est intégrée dans les lunettes de réalité augmentée (110),
avec une unité de traitement (106) qui est conçue pour communiquer avec la caméra (102) via une liaison de communication, et qui présente une unité d'évaluation (108) qui est conçue pour traiter les caractéristiques biométriques du visage sous la forme de données qui sont détectées au moyen de la caméra (102) à partir de la personne à contrôler, puis pour transmettre un résultat de traitement qui en résulte à l'unité de sortie (110), qui est conçue à cet effet pour communiquer également avec l'unité de traitement (106) via une liaison de communication, dans lequel les lunettes de réalité augmentée (110) sont destinées à être disposées sur un contrôleur ou à être au moins temporairement fixées en place de manière à ce que les mains du contrôleur restent libres lors de la détection optique, dans lequel la montre intelligente (114) est en communication avec l'unité de traitement (106), dans lequel la montre intelligente (114) présente un écran tactile et est conçue pour mettre en oeuvre un niveau de sécurité supplémentaire afin de détecter une ou plusieurs empreintes digitales de la personne à contrôler, dans lequel la montre intelligente (114) est configurée pour capturer la ou les empreintes digitales en même temps que ou après la détection optique du visage de la personne à contrôler,
dans lequel l'unité de traitement (106) est agencée pour traiter un dactylogramme d'un ou plusieurs doigts de la personne à contrôler et pour le comparer avec des empreintes digitales stockées dans une base de données de l'unité de traitement (106),
et dans lequel l'unité de sortie (110) est configurée pour délivrer des informations ou des données personnelles associées à l'unité de sortie (110) si l'empreinte digitale détectée correspond à une empreinte digitale stockée dans la base de données.

2. Agencement (100) selon la revendication 1, **caractérisé en ce que** la caméra (102) est conçue pour détecter un code QR ou un code à barres, et **en ce que** l'unité d'évaluation (108) est conçue pour évaluer le code QR ou le code à barres.

3. Agencement (100) selon la revendication 1 ou 2, **caractérisé en ce que** l'unité de traitement (108) est associée à une unité d'émission et de réception, et **en ce que** l'unité de traitement (108) est en liaison de communication par l'intermédiaire de l'unité d'émission et de réception avec un serveur supérieur hiérarchiquement par rapport à l'unité de traitement (108), qui est conçu pour traiter une ou plusieurs commandes d'évaluation pour évaluer les données détectées au moyen de la caméra (102) et pour restituer un résultat d'évaluation à l'unité de traitement (108).

4. Agencement (100) selon l'une quelconque des revendications 1 à 3, **caractérisé en ce qu'**au moins une source de lumière est présente pour un éclairage supplémentaire de la personne lors de la détection optique, qui est intégrée dans les lunettes de réalité augmentée (112).

5. Procédé de détection optique d'une personne à contrôler et pour son authentification, à l'aide d'un agencement (100) selon l'une quelconque des revendications 1 à 4, comprenant les étapes consistant à :
- détecter optiquement des caractéristiques biométriques du visage de la personne à contrôler au moyen de la caméra (102),
- détecter au moins une empreinte digitale de la personne à contrôler au moyen de la montre intelligente (114),
- traiter des données détectées au moyen de la caméra (102) et de la montre intelligente (114) dans l'unité d'évaluation (108) pour produire un résultat de traitement, dans lequel la au moins une empreinte digitale détectée est comparée avec des empreintes digitales stockées dans une base de données de l'unité de traitement (106) qui sont corrélées à d'autres données personnelles, et
- transmettre le résultat du traitement à l'unité de sortie (110) qui est en liaison de communication avec l'unité de traitement (106),
dans lequel, si l'empreinte digitale détectée correspond à l'une des empreintes digitales stockées dans la base de données, les données personnelles associées sont également émises au niveau de l'unité de sortie (110).

6. Procédé selon la revendication 5, **caractérisé en ce que** l'agencement (100) mesure une distance de la personne à contrôler et **en ce que** la détection optique a alors lieu lorsque la personne à contrôler se trouve à une distance prédéterminée ou pouvant être prédéterminée par rapport à la caméra (102).
